# EUROPÄISCHE PATENTANMELDUNG

(11) **EP 2 581 614 A2**
(43) Veröffentlichungstag der Anmeldung: **17.04.2013**
(21) Anmeldenummer: 12185572.0
(22) Anmeldetag: 24.09.2012
(51) Int. Cl.: F16C 11/10, B60D 1/54

(54) **Kugelschwenkmodul**

(30) Priorität: 13.10.2011 DE 102011084394
(71) Anmelder: ZF Friedrichshafen AG, 88038 Friedrichshafen (DE)
(72) Erfinder: Nordloh, Alfons, 49429 Visbek (DE); Adamczyk, Dirk, 88697 Bermatingen (DE); Wulf, Markus, 32479 Hille (DE); Broeker, Klaus, 49163 Bohmte (DE)

(57) **Zusammenfassung**

Kugelschwenkmodul mit einem Gehäuse (5), einem eine Gelenkkugel (2) aufweisenden und sich in Richtung einer Zapfenlängsachse (6) erstreckenden Kugelzapfen (3), der mittels der Gelenkkugel (2) bewegbar in dem Gehäuse (5) gelagert ist, sich in einer axialen Richtung (9) aus dem Gehäuse (5) heraus erstreckt und an der Gelenkkugel (2) eine unebene Führungsfläche (13) aufweist, mehreren an dem Gehäuse (5) vorgesehenen Führungselementen (14, 15), die mit der Führungsfläche (13) in Kontakt stehen, und einer zwischen den Kugelzapfen (3) und das Gehäuse (5) geschalteten Drehfeder (19), deren Spannung durch Drehen des Kugelzapfens (3) relativ zu dem Gehäuse (5) um die Zapfenlängsachse (6) veränderbar ist, wobei die zwischen den separat voneinander am Gehäuse (5) gelagerten Führungselementen (14, 15) verlaufende Drehfeder (19) sich von dem Kugelzapfen (3) in Richtung der Zapfenlängsachse (6) an den Führungselementen (14, 15) vorbei erstreckt und im axialen Abstand zu diesen am Gehäuse (5) gelagert ist.

## Beschreibung

Die Erfindung betrifft ein Kugelschwenkmodul mit einem Gehäuse, einem eine Gelenkkugel aufweisenden und sich in Richtung einer Zapfenlängsachse erstreckenden Kugelzapfen, der mittels der Gelenkkugel bewegbar in dem Gehäuse gelagert ist, sich in einer axialen Richtung aus dem Gehäuse heraus erstreckt und an der Gelenkkugel eine unebene Führungsfläche aufweist, mehreren an dem Gehäuse vorgesehenen Führungselementen, die mit der Führungsfläche in Kontakt stehen, und einer zwischen den Kugelzapfen und das Gehäuse geschalteten Drehfeder, deren Spannung durch Drehen des Kugelzapfens relativ zu dem Gehäuse um die Zapfenlängsachse veränderbar ist.

Die DE 10 2008 002 207 A1 offenbart ein Kugelgelenk mit einem eine Zapfenöffnung aufweisenden Gehäuse, einem eine Gelenkkugel aufweisenden Kugelzapfen, der mittels der Gelenkkugel bewegbar in dem Gehäuse gelagert ist und sich durch die Zapfenöffnung hindurch aus dem Gehäuse heraus erstreckt, wobei die Gelenkkugel eine unebene Regelfläche aufweist, die mit einer an dem Gehäuse vorgesehenen Anlage in Kontakt steht. Die Gelenkkugel weist wenigstens eine Querbohrung auf, in der wenigstens eine Rastkugel bewegbar geführt ist, die in eine Rastausnehmung im Gehäuse eingreifen kann. In dem Kugelzapfen ist eine senkrecht zu der Querbohrung ausgerichtete Längsbohrung vorgesehen, in der ein Sperrbolzen federnd gelagert ist, der die Rastkugel in die Rastausnehmung drücken kann.

Die DE 10 2009 046 631 A1 offenbart ein Kugelschwenkmodul mit einem Gehäuse, einem eine Gelenkkugel umfassenden Kugelzapfen, der mit seiner Gelenkkugel bewegbar in dem Gehäuse gelagert ist und sich aus diesem heraus erstreckt, einem in dem Gehäuse gelagerten Führungselement, an dem der Kugelzapfen mit einer an der Gelenkkugel vorgesehenen Führungsfläche anliegt, sodass der Kugelzapfen zwischen zwei Endstellungen entlang einer vorgegebenen Bewegungsbahn relativ zu dem Gehäuse bewegbar ist, wobei eine in dem Gehäuse angeordnete und zwischen den Kugelzapfen und das Gehäuse geschaltete Drehfeder vorgesehen ist, gegen deren Federkraft der Kugelzapfen relativ zu dem Gehäuse in wenigstens eine der Endstellungen bewegbar ist. Das Führungselement umfasst zwei einander gegenüberliegende Lagerhülsen und einen Führungselementbolzen, auf dem die Lagerhülsen gelagert sind. Der Führungselementbolzen erstreckt sich quer durch einen Innenraum des Gehäuses, ist beidseitig am Gehäuse gelagert und bildet die gehäuseseitige Lagerstätte der Drehfeder. Ferner ist eine Verriegelungsvorrichtung vorgesehen, mittels welcher der Kugelzapfen mit dem Gehäuse in den Endstellungen verriegelbar ist.

Bei einer Drehung des Kugelzapfens relativ zu dem Gehäuse wird die Drehfeder zwischen dem Kugelzapfen und dem Führungselementbolzen gespannt und dabei auch deformiert. Wird für die Verriegelungsvorrichtung gemäß der DE 10 2009 046 631 A1 ein Sperrbolzen gemäß der DE 10 2008 002 207 A1 eingesetzt, so kann aufgrund der Deformation der Feder die axiale Nachstellmöglichkeit des Sperrbolzens behindert werden. Ferner kann die axiale Nachstellmöglichkeit des Sperrbolzens dadurch beschränkt werden, dass dieser an dem Führungselementbolzen anschlägt.

Ausgehend hiervon liegt der Erfindung die Aufgabe zugrunde, bei einem Kugelschwenkmodul der eingangs genannten Art eine Deformation der Drehfeder im Bereich des Kugelzapfens gering halten zu können.

Diese Aufgabe wird durch ein Kugelschwenkmodul nach Anspruch 1 gelöst. Bevorzugte Weiterbildungen des Kugelschwenkmoduls sind in den Unteransprüchen und in der nachfolgenden Beschreibung gegeben.

Das Kugelschwenkmodul, insbesondere für eine Anhängevorrichtung für ein Fahrzeug, umfasst ein Gehäuse, einen eine Gelenkkugel aufweisenden und sich in Richtung einer Zapfenlängsachse erstreckenden Kugelzapfen, der mittels der Gelenkkugel bewegbar in dem Gehäuse gelagert ist, sich in einer axialen Richtung aus dem Gehäuse heraus erstreckt und an der Gelenkkugel eine unebene Führungsfläche aufweist, mehrere an dem Gehäuse vorgesehene Führungselemente, die mit der Führungsfläche in Kontakt stehen, und eine zwischen den Kugelzapfen und das Gehäuse geschaltete Drehfeder, deren Spannung durch Drehen des Kugelzapfens um die Zapfenlängsachse relativ zu dem Gehäuse veränderbar ist, wobei die zwischen den separat voneinander am Gehäuse gelagerten Führungselementen verlaufende Drehfeder sich von dem Kugelzapfen nahezu in Richtung der Zapfenlängsachse an den Führungselementen vorbei erstreckt und im axialen Abstand zu diesen am Gehäuse gelagert ist.

Die Führungselemente sind nicht gemeinsam auf einem Führungselementbolzen, sondern separat voneinander am Gehäuse gelagert. Somit ist es möglich, die Drehfeder länger auszubilden, da deren Länge nicht durch einen solchen Führungselementbolzen begrenzt wird. Ist die Drehfeder länger, verteilt sich aber auch eine Deformation der Drehfeder aufgrund einer Verdrehung des Kugelzapfens relativ zu dem Gehäuse über eine größere Länge, sodass die Deformation der Drehfeder im Bereich des Kugelzapfens gering gehalten werden kann. Wird das Kugelschwenkmodul mit einem Sperrbolzen gemäß der DE 10 2008 002 207 A1 ausgestattet, ist dessen axiale Nachstellmöglichkeit wegen dieser geringen Deformation weniger oder nicht mehr beschränkt. Auch begrenzt kein Führungselementbolzen die Nachstellmöglichkeit des Sperrbolzens.

Dem Kugelschwenkmodul, insbesondere dem Gehäuse, ist bevorzugt eine in axialer Richtung verlaufende Mittellängsachse zugeordnet. Vorzugsweise verläuft die Mittellängsachse durch den Mittelpunkt der Gelenkkugel. Ferner verläuft die Zapfenlängsachse bevorzugt durch den Mittelpunkt der Gelenkkugel.

Zwischen den Führungselementen ist insbesondere ein Freiraum vorgesehen, durch welchen sich die Drehfeder hindurch erstreckt. Vorzugsweise erstreckt sich die Drehfeder in axialer Richtung und/oder in Richtung der Zapfenlängsachse durch den Freiraum hindurch.

Die Anzahl der Führungselemente ist bevorzugt gleich zwei. Vorzugsweise liegen die Führungselemente bezüglich der Mittellängsachse einander diametral gegenüber. Vorteilhaft weisen die Führungselemente einen Abstand zueinander auf, bevorzugt in radialer Richtung. Eine radiale Verbindungslinie zwischen den Führungselementen verläuft vorzugsweise durch den Freiraum. Vorteilhaft liegen die Führungselemente in radialer Richtung einander gegenüber. Als radiale Richtung wird insbesondere eine beliebige oder jedwede Richtung bezeichnet, die quer zur axialen Richtung verläuft.

Bevorzugt ist die Drehfeder mit einer zapfenseitigen Lagerung an dem Kugelzapfen und mit einer gehäuseseitigen Lagerung an dem Gehäuse gelagert. Insbesondere liegen die Lagerungen in axialer Richtung auf unterschiedlichen Seiten der Führungselemente. Bevorzugt weisen die Lagerungen jeweils einen axialen Abstand zu den Führungselementen auf.

Die Drehfeder umfasst insbesondere einen gehäuseseitigen Endbereich, mittels welchem die Drehfeder an dem Gehäuse gelagert ist. Vorzugsweise ist die Drehfeder mit dem gehäuseseitigen Endbereich an einem Boden, insbesondere Gehäuseboden des Gehäuses gelagert, der bevorzugt der Führungsfläche gegenüberliegt. Der gehäuseseitige Endbereich der Drehfeder erstreckt sich vorteilhaft quer oder schräg zur Zapfenlängsachse. Bevorzugt steht der gehäuseseitige Endbereich der Drehfeder in Drehmitnahmeverbindung mit dem Gehäuse, insbesondere mit dem Gehäuseboden. Diese Drehmitnahmeverbindung kann mit und ohne Spiel verwirklicht sein. Bevorzugter Weise steht der gehäuseseitige Endbereich der Drehfeder aber mit Spiel in Drehmitnahmeverbindung mit dem Gehäuse, insbesondere mit dem Gehäuseboden, was noch erläutert wird.

Die Drehfeder umfasst insbesondere einen zapfenseitigen Endbereich, mittels welchem die Drehfeder an dem Kugelzapfen gelagert ist. Der zapfenseitige Endbereich der Drehfeder erstreckt sich vorteilhaft in Richtung der Zapfenlängsachse. Bevorzugt steht der zapfenseitige Endbereich der Drehfeder in Drehmitnahmeverbindung mit dem Kugelzapfen. Diese Drehmitnahmeverbindung kann mit und ohne Spiel verwirklicht sein. Bevorzugt steht der zapfenseitige Endbereich der Drehfeder aber spielfrei in Drehmitnahmeverbindung mit dem Kugelzapfen.

Gemäß einer Weiterbildung ist die Drehfeder, insbesondere der gehäuseseitige Endbereich der Drehfeder, mittels eines oder mehrerer Mitnehmer am Gehäuse gelagert. Bevorzugt sind der oder die Mitnehmer im Gehäuse angeordnet. Insbesondere greifen der gehäuseseitige Endbereich der Drehfeder und der oder die Mitnehmer formschlüssig ineinander. Der oder die Mitnehmer sind bevorzugt fest, insbesondere starr, mit dem Gehäuse verbunden und/oder einstückig mit diesem ausgebildet. Insbesondere sind der oder die Mitnehmer in axialer Richtung auf einer dem Kugelzapfen abgewandten Seite der Führungselemente angeordnet und weisen zu diesen bevorzugt einen Abstand auf. Vorzugsweise sind der oder die Mitnehmer am Gehäuseboden vorgesehen. Der oder die Mitnehmer erstrecken sich z.B. in axialer Richtung. Vorteilhaft sind die Mitnehmer im Abstand zueinander angeordnet, sodass der gehäuseseitige Endbereich vorzugsweise zwischen den Mitnehmern angeordnet ist.

Vorteilhaft umfassen oder bilden die Mitnehmer am Boden des Gehäuses vorgesehene, sich in axialer Richtung erstreckende und zueinander beabstandete Vorsprünge, zwischen denen der gehäuseseitige Endbereich der Drehfeder angeordnet ist. Vorzugsweise sind die Vorsprünge fest, insbesondere starr, mit dem Gehäuseboden verbunden und/oder einstückig mit diesem ausgebildet. Die Vorsprünge sind beispielsweise in Form von Bolzen, Stiften oder Hülsen ausgebildet. Vorzugsweise ist die Anzahl der Vorsprünge gleich vier. Bevorzugt sind die Vorsprünge zu Paaren zusammengefasst, zwischen denen der gehäuseseitige Endbereich angeordnet ist.

Gemäß einer Ausgestaltung ist am Gehäuseboden eine Nut vorgesehen, in welche der gehäuseseitige Endbereich der Drehfeder einliegt. Die Nut erstreckt sich vorzugsweise quer zur axialen Richtung. Vorteilhaft umfassen oder bilden die Mitnehmer am Boden des Gehäuses vorgesehene, sich in axialer Richtung erstreckende und zueinander beabstandete Erhebungen, welche die Nut definieren. Insbesondere verläuft die Nut zwischen den Erhebungen. Die Vorsprünge sind vorzugsweise fest, insbesondere starr, mit dem Gehäuseboden verbunden und/oder einstückig mit diesem ausgebildet.

Die Drehfeder liegt bevorzugt an einer an dem Kugelzapfen vorgesehen Federlagerfläche an. Vorteilhaft wird die Federlagerfläche von der Führungsfläche umringt. Ferner ist es möglich, dass in der Gelenkkugel eine Drehfederaufnahmeausnehmung vorgesehen ist, in welche die Drehfeder eingreift und/oder eintaucht. Die Federlagerfläche ist in diesem Fall bevorzugt am Boden der Drehfederaufnahmeausnehmung vorgesehen. Vorteilhaft wird die Öffnung der Drehfederaufnahmeausnehmung von der Führungsfläche umringt. Insbesondere greifen der zapfenseitige Endbereich der Drehfeder und der Kugelzapfen formschlüssig ineinander. Beispielsweise greift der zapfenseitige Endbereich der Drehfeder in ein in dem Kugelzapfen eingebrachtes Loch ein, welches sich bevorzugt in Richtung der Zapfenlängsachse erstreckt. Insbesondere ist dieses Loch quer zur Zapfenlängsachse versetzt angeordnet und weist somit einen Abstand zu dieser auf. Beispielsweise ist dieses Loch in der Federlagerfläche vorgesehen.

Gemäß einer Ausgestaltung ist die Drehfeder als Schraubenfeder ausgebildet. Da die Drehfeder länger als im Stand der Technik ausbildbar ist, kann sie eine größere Anzahl an Windungen aufweisen, was insbesondere mit einer verbesserten dynamischen Haltbarkeit der Drehfeder verbunden ist. Bevorzugt umfasst die Drehfeder einen schraubenförmig gewundenen Bereich, mit welchem die Drehfeder sich in Richtung der Zapfenlängsachse insbesondere an den Führungselementen vorbeierstreckt. Vorzugsweise erstreckt sich die Drehfeder mit ihrem schraubenförmig gewundenen Bereich durch den Freiraum hindurch.

Der gehäuseseitige Endbereich der Drehfeder ist bevorzugt von dem schraubenförmigen Bereich abgebogen, insbesondere quer oder schräg zur Zapfenlängsachse. Alternativ kann der gehäuseseitige Endbereich der Drehfeder auch axial oder in Richtung der Zapfenlängsachse von dem schraubenförmigen Bereich abgebogen sein und in ein in dem Gehäuseboden eingebrachtes Loch eingreifen, welches sich vorzugsweise in axialer Richtung erstreckt. Der zapfenseitige Endbereich der Drehfeder ist bevorzugt von dem schraubenförmigen Bereich in Richtung der Zapfenlängsachse abgebogen.

Die Drehfeder besteht bevorzugt aus Metall, insbesondere aus Federstahl. Vorzugsweise besteht die Drehfeder aus Draht, beispielsweise aus Metalldraht, insbesondere aus Federstahldraht. Ist die Drehfeder als Schraubenfeder ausgebildet, besteht der schraubenförmig gewundene Bereich der Drehfeder somit vorzugsweise aus diesem Draht, der insbesondere schraubenförmig gewunden ist.

Gemäß einer Weiterbildung umfasst das Kugelschwenkmodul eine Verriegelungsvorrichtung, mittels welcher der Kugelzapfen mit dem Gehäuse verriegelbar ist. Bevorzugt ist der Kugelzapfen mittels der Verriegelungsvorrichtung in zwei oder in wenigstens zwei Stellungen verriegelbar, von denen eine z.B. als Betriebsstellung und die andere oder eine andere z.B. als Ruhestellung bezeichnet wird.

Die Verriegelungsvorrichtung umfasst bevorzugt einen in dem Kugelzapfen in Richtung der Zapfenlängsachse verschiebbar geführten Sperrbolzen, mittels welchem die Verriegelungsvorrichtung vorzugsweise betätigbar ist. Vorteilhaft liegt der Sperrbolzen in einem in dem Kugelzapfen vorgesehenen und sich in Richtung der Zapfenlängsachse erstreckenden Sperrbolzenloch ein. Vorzugsweise erstreckt sich das Sperrbolzenloch in Richtung der Zapfenlängsachse durch den Kugelzapfen hindurch. Beispielsweise mündet das Sperrbolzenloch in die Drehfederaufnahmeausnehmung, falls diese vorhanden ist.

In der Gelenkkugel ist bevorzugt wenigstens ein in das Sperrbolzenloch einmündendes, quer oder schräg zur Zapfenlängsrichtung verlaufendes und zu einer Wandung des Gehäuses hin offenes Verriegelungselementloch vorgesehen, in welchem wenigstens ein Verriegelungselement bewegbar einliegt, welches mittels des Sperrbolzens in eine in der Wandung vorgesehene Arretierungsausnehmung einrückbar ist. Somit ist der Kugelzapfen mit dem Gehäuse durch Einrücken des Verriegelungselements in die Arretierungsausnehmung verriegelbar. Das Verriegelungselement kann ein- oder mehrteilig ausgebildet sein. Die Wandung läuft vorzugsweise um die Gelenkkugel herum. Insbesondere begrenzt die Wandung einen Innenraum des Gehäuses, in dem die Gelenkkugel angeordnet ist. Vorteilhaft ist die Wandung starr mit dem Boden des Gehäuses verbunden und/oder einstückig mit diesem ausgebildet. Ferner kann der Boden als fest, insbesondere starr oder drehstarr, mit der Wandung verbundener Deckel ausgebildet sein. Vorzugsweise wird der Innenraum auch durch den Boden begrenzt.

Bevorzugt umfasst der Sperrbolzen eine zur Zapfenlängsachse schräg verlaufende Betätigungsfläche, mittels welcher der Sperrbolzen an dem Verriegelungselement anliegt. Insbesondere ist der Sperrbolzen mit einer Sperrbolzenfeder in Richtung auf das Verriegelungselement gespannt. Somit kann das Kugelschwenkmodul automatisch verriegelt werden, sobald das Verriegelungselementloch mit der Arretierungsausnehmung fluchtet. Zum Lösen der Verriegelung kann der Sperrbolzen gegen die Federkraft der Sperrbolzenfeder von dem Verriegelungselement abgerückt werden, sodass dieses aus der Arretierungsausnehmung ausrücken kann.

Die Form der Führungsfläche weicht insbesondere von der Form der Kugeloberfläche der Gelenkkugel ab. Gemäß einer Weiterbildung bildet die Führungsfläche eine Regelfläche. Unter einer Regelfläche wird insbesondere eine Fläche verstanden, die durch Bewegen einer Geraden im Raum erzeugbar ist. Vorteilhaft ist durch das Zusammenwirken der Führungselemente mit der Führungsfläche eine Drehung des Kugelzapfens relativ zu dem Gehäuse um die Zapfenlängsachse abhängig von einer seitlichen Auslenkung des Kugelzapfens relativ zu dem Gehäuse. Eine solche seitliche Auslenkung des Kugelzapfens erfolgt z.B. um wenigstens eine Schwenkachse, die schräg oder senkrecht zur Zapfenlängsachse verläuft. Vorteilhaft verläuft die wenigstens eine Schwenkachse durch den Mittelpunkt der Gelenkkugel. Die Führungsfläche bildet insbesondere eine Stirnfläche, vorzugsweise eine freie Stirnfläche des Kugelzapfens. Vorteilhaft umringt die Führungsfläche die Zapfenlängsachse.

Bevorzugt stehen die Führungselemente jeweils mit der Führungsfläche in Punktberührung oder in Linienberührung. Vorteilhaft liegen die Berührungspunkte und/oder Berührungslinien der Führungselemente mit der Führungsfläche alle auf einer gemeinsamen Geraden. Sofern diese Voraussetzungen erfüllt sind, können die Führungselemente grundsätzlich eine beliebige Form aufweisen. Vorteilhaft weisen die Führungselemente jeweils eine sich in Richtung der Führungsfläche der Gelenkkugel verjüngende Kopfkontur auf, mit welcher die Führungselemente an der Führungsfläche anliegen bzw. in punkt- oder linienkontakt stehen. Mit Kopfkontur ist hierbei die Kontur in Richtung der Führungsfläche gemeint. Die Führungselemente sind z.B. als Kugeln, als Stifte, als Hülsen oder als Gleitsteine ausgebildet. Die Stifte und/oder die Hülsen sind insbesondere zylindrisch oder tonnenförmig ausgebildet. Beispielsweise bilden die Führungselemente jeweils einen Rotationskörper. Insbesondere sind die Zylinder an einem Ende oder an ihren Enden linsen- oder kuppenförmig ausgebildet bzw. weisen eine konvexe Stirnfläche auf.

Gemäß einer Weiterbildung sind in dem Gehäuse Lagerstätten vorgesehen, in welchen die Führungselemente gelagert sind und/oder einliegen. Die Lagerstätten können z.B. jeweils als Vertiefung im Gehäuse ausgebildet sein, die beispielsweise zylindrisch, muldenförmig, schalenförmig, wannenförmig oder rinnenförmig ist. Bei den Vertiefungen handelt es sich insbesondere um axiale Vertiefungen nach Art einer Bohrung bzw. eines Sackloches. Ferner ist es möglich, in der Wandung des Gehäuses durchgehende Quer- oder Radialbohrungen vorzusehen, durch welche hindurch die Führungselemente von außen in den Innenraum des Gehäuses eingeführt werden können.

Gemäß einer Ausgestaltung umfasst der Kugelzapfen einen starr mit der Gelenkkugel verbundenen Zapfenbereich, der sich insbesondere in Richtung der Zapfenlängsachse erstreckt. Bevorzugt ist die Führungsfläche auf einer dem Zapfenbereich abgewandten Seite der Gelenkkugel vorgesehen ist. Insbesondere erstreckt sich der Kugelzapfen mit seinem Zapfenbereich aus dem Gehäuse heraus. Der Kugelzapfen ist vorzugsweise unter Zwischenschaltung einer Lagerschale in dem Gehäuse gelagert, die vorteilhaft die Gelenkkugel umschließt.

Das Gehäuse umfasst bevorzugt eine Zapfenöffnung, durch welche hindurch sich der Kugelzapfen aus dem Gehäuse heraus erstreckt. Insbesondere ist der Zapfenbereich zumindest bereichsweise außerhalb des Gehäuses angeordnet. Vorteilhaft erstreckt sich der Kugelzapfen mit seinen Zapfenbereich durch die Zapfenöffnung hindurch.

Die Zapfenöffnung ist bevorzugt als Langloch ausgebildet und beschränkt die seitliche Auslenkung des Kugelzapfens insbesondere auf die Längsrichtung des Langlochs. In Kombination mit dem Zusammenwirken von Führungsfläche und Führungselementen lässt sich somit die Bewegungsmöglichkeit des Kugelzapfens relativ zu dem Gehäuse auf eine Bewegungsbahn einschränken, entlang welcher der Kugelzapfen zwangsgeführt ist. Alternativ ist es möglich, den Kugelzapfen in einer Kulisse zu führen, mittels welcher die seitliche Auslenkung des Kugelzapfens auf eine Richtung beschränkt wird.

Der Boden des Gehäuses ist bevorzugt der Zapfenöffnung gegenüberliegend angeordnet. Ferner kann die Zapfenöffnung in einem Verschlussring vorgesehen sein, der fest, vorzugsweise starr, mit dem Gehäuse verbunden ist. Der Verschlussring wird insbesondere dem Gehäuse zugerechnet.

Der Kugelzapfen ist bevorzugt entlang einer oder der vorgegebenen Bewegungsbahn zwischen zwei Endstellungen relativ zu dem Gehäuse bewegbar. Die Endstellungen werden insbesondere der Bewegungsbahn zugerechnet, sodass der Kugelzapfen die Endstellungen einnehmen kann. Bevorzugt kann der Kugelzapfen in den Endstellungen mittels der Verriegelungsvorrichtung mit dem Gehäuse verriegelt werden. Eine der Endstellungen bildet somit vorzugsweise die Betriebsstellung, und die andere Endstellung bildet vorzugsweise die Ruhestellung.

Bevorzugt ist die Drehfeder in einer auf der Bewegungsbahn liegenden Stellung des Zapfens spannungsfrei, die vorteilhaft eine Zwischenstellung zwischen den Endstellungen des schwenkbaren Zapfens bildet. Die spannungsfreie Stellung kann sowohl in der Mitte der Bewegungsbahn liegen oder zu einer der Endstellungen hin versetzt sein. Es ist aber auch möglich, dass die spannungsfreie Stellung durch eine der Endstellungen gebildet ist. Vorzugsweise ist der Kugelzapfen durch Drehen um die Zapfenlängsachse relativ zu dem Gehäuse gegen die Kraft der Drehfeder in wenigstens eine der Endstellungen oder in die Endstellungen überführbar. In der spannungsfreien Stellung kann ein Spiel für den Kugelzapfen vorgesehen sein, sodass dieser einen bestimmten Freiweg um die spannungsfreie Stellung herum relativ zu dem Gehäuse bewegt werden kann, ohne die Drehfeder zu spannen. Hierdurch kann die Belastung der Drehfeder reduziert werden. Die Mitte der Bewegungsbahn liegt vorzugsweise innerhalb des Freiwegs. Der Freiweg kann dabei bezüglich der Mitte der Bewegungsbahn symmetrisch oder unsymmetrisch sein. Es ist aber auch möglich, dass die Mitte der Bewegungsbahn außerhalb des Freiwegs liegt. Das Spiel wird vorzugsweise durch die Lagerung der Drehfeder an dem Gehäuse ermöglicht, sodass der gehäuseseitige Endbereich bevorzugt mit Spiel am Gehäuse, insbesondere am Gehäuseboden, gelagert ist. Beispielsweise kann der gehäuseseitige Endbereich mit Spiel an dem oder den Mitnehmern gelagert und/oder mit Spiel zwischen den Mitnehmern angeordnet sein. Insbesondere kann der gehäuseseitige Endbereich der Drehfeder mit Spiel an den Erhebungen und/oder Vorsprüngen und/oder Vorsprungspaaren gelagert und/oder mit Spiel zwischen den Erhebungen und/oder Vorsprüngen und/oder Vorsprungspaaren angeordnet sein. Bevorzugt liegt der gehäuseseitige Endbereich der Drehfeder mit Spiel in der Nut ein. Vorzugsweise ist die Nut dafür zu ihren Enden hin, insbesondere zu ihren radialen Enden hin, aufgeweitet. Unter der Aufweitung ist beispielsweise eine kreissegmentartige Freimachung zu verstehen. Der Endbereich der Drehfeder kann somit innerhalb der Nut schwenken bzw. dessen Schwenkbewegung wird durch die Nut begrenzt. Ergänzend oder alternativ ist es möglich das Spiel durch die Lagerung der Drehfeder an dem Kugelzapfen zu ermöglichen. In diesem Fall ist der zapfenseitige Endbereich bevorzugt mit Spiel am dem Kugelzapfen gelagert. Durch die genannten Maßnahmen kann vorteilhafter Weise eine Kennlinie in Bezug auf die Drehfeder bzw. den Schwenkbereich festgelegt werden.

Gemäß einer Weiterbildung bilden der Kugelzapfen und das Gehäuse jeweils ein Gelenkteil, wobei eines der Gelenkteile fest, insbesondere starr, mit einer Kugelstange verbunden ist, die an ihrem freien Ende eine Kupplungskugel trägt. Ferner ist das andere der Gelenkteile bevorzugt fest, insbesondere starr, mit einem Fahrzeugbauteil und/oder einem Fahrzeugaufbau des oder eines Fahrzeugs verbunden oder verbindbar. Beispielsweise ist das andere Gelenkteil fest mit einem Fahrzeugquerträger des Fahrzeugs verbunden oder verbindbar. Das Kugelschwenkmodul ist somit vorteilhaft Teil einer Anhängevorrichtung oder Anhängerkupplung des Fahrzeugs.

Die Erfindung wird nachfolgend anhand bevorzugter Ausführungsformen unter Bezugnahme auf die Zeichnung beschrieben. In der Zeichnung zeigen:
Fig. 1 einen Längsschnitt durch ein Kugelschwenkmodul gemäß einer ersten Ausführungsform,
Fig. 2 eine Schnittansicht des Gehäuses entlang der aus Fig. 1 ersichtlichen Schnittlinie A-A,
Fig. 3 eine Schnittansicht des Kugelschwenkmoduls entlang der aus Fig. 1 ersichtlichen Schnittlinie A-A,
Fig. 4 einen Schnitt durch eines der Führungselemente entlang der aus Fig. 3 ersichtlichen Schnittlinie B-B,
Fig. 5 einen Querschnitt durch ein Kugelschwenkmodul gemäß einer zweiten Ausführungsform,
Fig. 6 einen Schnitt durch ein Führungselement gemäß einer dritten Ausführungsform,
Fig. 7 einen Schnitt durch ein Führungselement gemäß einer vierten Ausführungsform.
Fig. 8 einen Schnitt durch ein Führungselement gemäß einer fünften Ausführungsform und
Fig. 9 eine schematische Seitenansicht eines Kraftfahrzeugs mit einem Kugelschwenkmodul gemäß einer der Ausführungsformen.

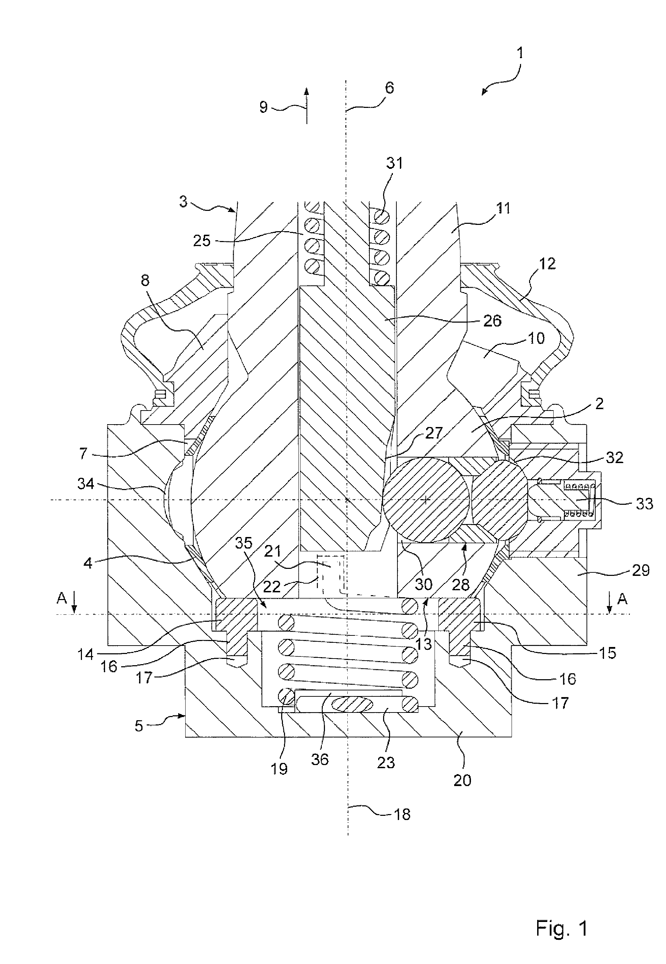

Aus Fig. 1 ist ein Längsschnitt durch ein teilweise dargestelltes Kugelschwenkmodul 1 gemäß einer ersten Ausführungsform ersichtlich, wobei ein eine Gelenkkugel 2 umfassender Kugelzapfen 3 unter Zwischenschaltung einer die Gelenkkugel 2 umschließenden Lagerschale 4 bewegbar in einem Gehäuse 5 gelagert ist. Der Kugelzapfen 3 umfasst einen starr mit der Gelenkkugel 2 verbundenen Zapfenbereich 11 und erstreckt sich in Richtung einer Zapfenlängsachse 6, die durch den Mittelpunkt der Gelenkkugel 2 verläuft. Die Lagerschale 4 und die Gelenkkugel 2 sitzen in einem Innenraum 7 des Gehäuses 5, welches hier im Wesentlichen topfförmig ausgebildet ist. Ein starr mit dem Gehäuse 5 verbundener Verschlussring 8 verschließt das Gehäuse 5 und sichert die Lagerschale 4 und die Gelenkkugel 2 in einer axialen Richtung 9 formschlüssig in dem Gehäuse 5. Der Verschlussring 8 wird insbesondere dem Gehäuse 5 zugerechnet und ist mit einer als Langloch ausgebildeten Zapfenöffnung 10 versehen, durch welche hindurch sich der Kugelzapfen 3 mit seinem Zapfenbereich 11 in axialer Richtung 9 aus dem Gehäuse 5 heraus erstreckt. An dem Verschlussring 8 ist ein die Zapfenöffnung 10 umringender Dichtungsbalg 12 festgelegt, der sich von dem Verschlussring 8 bis zu dem Zapfenbereich 11 erstreckt und dichtend an diesem anliegt.

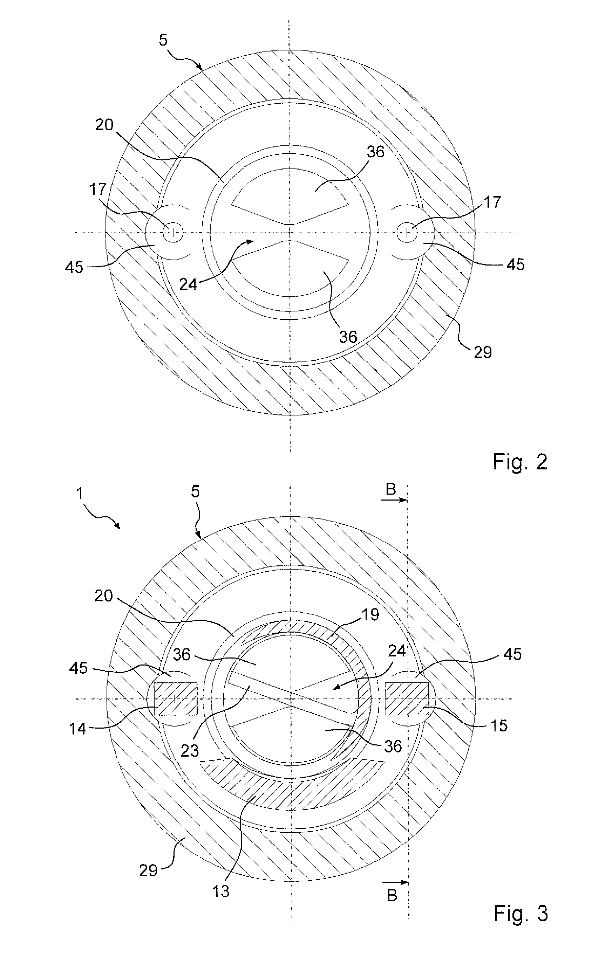

Auf ihrer dem Zapfenbereich 11 abgewandten Seite ist die Gelenkkugel 2 mit einer Führungsfläche 13 versehen, die eine Stirnfläche des Kugelzapfens 3 bildet und als unebene Regelfläche ausgebildet ist. Durch die Ausbildung der Führungsfläche 13 als Regelfläche liegt der aus Fig. 1 ersichtliche Schnitt der Führungsfläche 13 auf einer Geraden, obwohl die Führungsfläche 13 uneben ist. Allerdings würde sich durch eine Drehung des Kugelzapfens 3 relativ zu dem Gehäuse 5 um die Zapfenlängsachse 6 die Neigung dieser Gerade ändern. Die Führungsfläche 13 liegt an Führungselementen 14 und 15 an, die gleichartig ausgebildet und separat voneinander in dem Gehäuse 5 gelagert sind. Dazu weist jedes der Führungselemente einen axialen Vorsprung 16 auf, der in einer im Gehäuse 5 vorgesehenen Axialbohrung 17 sitzt. Ferner sitzt jedes der Führungselemente 14 und 15 in einer axialen Vertiefung 45 (siehe Fig. 2), in welche die jeweilige Axialbohrung 17 mittig eingebracht ist. Da die Führungselemente 14 und 15 über ihre Vorsprünge 16 in den Axialbohrungen 17 gesichert sind, können die Vertiefungen 45 hier aber auch entfallen. Die Führungselemente 14 und 15 stehen jeweils mit der Führungsfläche 13 in Linienberührung, wobei die Berührungslinien der Führungselemente 14 und 15 mit der Führungsfläche 13 auf einer gemeinsamen Geraden liegen. Durch das Zusammenwirken der Führungselemente 14 und 15 mit der Führungsfläche 13 führt eine Drehung des Kugelzapfens 3 relativ zu dem Gehäuse 5 um die Zapfenlängsachse 6 zu einer seitlichen Auslenkung des Kugelzapfens 3, sodass sich der Winkel zwischen der Zapfenlängsachse 6 und einer sich in der axialen Richtung 9 erstreckenden und durch den Mittelpunkt der Gelenkkugel 2 verlaufenden Mittellängsachse 18 des Gehäuses 5 ändert. Gemäß der in Fig. 1 dargestellten Lage des Kugelzapfens 3 fällt die Mittellängsachse 18 allerdings mit der Zapfenlängsachse 6 zusammen, was einem nicht ausgelenkten Zustand des Kugelzapfens 3 in einer Endstellung entspricht. Ferner ist der Kugelzapfen 3 mit seinem Zapfenbereich 11 in der Zapfenöffnung 10 geführt, sodass eine Auslenkung des Kugelzapfens 3 nur in Richtung der Längsrichtung des von der Zapfenöffnung 10 gebildeten Langlochs möglich ist. Eine Drehung des Kugelzapfens 3 um die Zapfenlängsachse 6 wird allerdings von der Zapfenöffnung 10 zugelassen.

Zwischen den Kugelzapfen 3 und das Gehäuse 5 ist eine Drehfeder 19 geschaltet, die sich von dem Kugelzapfen 3 in Richtung der Zapfenlängsachse 6 bis zu einem Boden 20 (Gehäuseboden) des Gehäuses 5 erstreckt, welcher der Führungsfläche 13 gegenüberliegt. Die Drehfeder 19 ist als Schraubenfeder ausgebildet und weist einen in Richtung der Zapfenlängsachse 6 abgebogenen, zapfenseitigen Endbereich 21 auf, der in eine in dem Kugelzapfen 3 vorgesehene Bohrung 22 eingreift, die in Richtung der Zapfenlängsachse 6 verläuft und quer zu dieser versetzt angeordnet ist (der zapfenseitige Endbereich 21 und die Bohrung 22 sind in der Darstellung gemäß Fig. 1 verdeckt und daher lediglich gestrichelt angedeutet). Der zapfenseitige Endbereich 21 steht daher mit dem Kugelzapfen 3 in Drehmitnahmeverbindung. Ferner ist ein gehäuseseitiger Endbereich 23 der Drehfeder 19 quer zur Zapfenlängsachse 6 abgebogen und liegt in einer an dem Boden 20 des Gehäuses 5 vorgesehenen und im Wesentlichen radial verlaufenden Nut 24 (siehe Fig. 2 und 3) ein. Der gehäuseseitige Endbereich 23 steht daher mit dem Gehäuse 5 in Drehmitnahmeverbindung, sodass durch eine Drehung des Kugelzapfens 3 relativ zu dem Gehäuse 5 um die Zapfenlängsachse 6 die Spannung der Drehfeder 19 geändert werden kann. Die Drehmitnahmeverbindung des gehäuseseitigen Endbereichs 23 mit dem Gehäuse 5 ist allerdings mit einem Spiel versehen, wohingegen die Drehmitnahmeverbindung des zapfenseitigen Endbereichs 23 mit dem Kugelzapfen spielfrei oder im Wesentlichen spielfrei ist.

In dem Kugelzapfen 3 ist ein sich in Richtung der Zapfenlängsachse 6 erstreckendes, durchgehendes Sperrbolzenloch 25 vorgesehen, in dem ein Sperrbolzen 26 in Richtung der Zapfenlängsachse 6 verschiebbar geführt ist. In seinem der Führungsfläche 13 zugewandten Endbereich weist der Sperrbolzen 26 eine gegenüber der Zapfenlängsachse 6 schräg verlaufende Betätigungsfläche 27 auf, mittels welcher der Sperrbolzen 26 an einem mehrteiligen Verriegelungselement 28 anliegt, welches in einem in der Gelenkkugel 2 vorgesehenen, in das Sperrbolzenloch 25 einmündenden, sich quer zur Zapfenlängsachse 6 erstreckenden und zu einer den Innenraum 7 begrenzenden Wandung 29 des Gehäuses 5 hin offenen Verriegelungselementloch 30 einliegt und verschiebbar in diesem geführt ist. Der Sperrbolzen 26 ist mittels einer Feder 31 in Richtung der Zapfenlängsachse 6 gegen das Verriegelungselement 28 gespannt und drückt dieses in eine in der Wandung 29 vorgesehene Arretierungsausnehmung 32, die muldenförmig ausgebildet ist. In diesem Zustand ist der Kugelzapfen 3 mit dem Gehäuse 5 verriegelt. Wird der Sperrbolzen 26 gegen die Kraft der Sperrbolzenfeder 31 in Richtung des Pfeils 9 bewegt, wird das Führungselement 28 mittels eines federbelasteten Druckstifts 33 aus der Arretierungsausnehmung 32 ausgerückt, sodass sich der Kugelzapfen 3 relativ zu dem Gehäuse 5 bewegen kann. Ferner ist in der Wandung 29 eine zweite Arretierungsausnehmung 34 vorgesehen, die muldenförmig ausgebildet ist und in welche das Verriegelungselement 28 nach einer Drehung des Kugelzapfens 3 um die Zapfenlängsachse 6 um einen vorgegebenen Winkel einrücken kann, der hier beispielsweise 180° beträgt, sodass die beiden Arretierungsausnehmungen 32 und 34 einander gegenüberliegen. Greift das Verriegelungselement 28 in die Arretierungsausnehmung 34 ein, so ist der Kugelzapfen 3 mit dem Gehäuse 5 verriegelt. Die Arretierungsausnehmungen 32 und 34 definieren somit verriegelbare Endstellungen des Kugelzapfens 3, der relativ zu dem Gehäuse 5 zwischen den Endstellungen entlang einer vorgegebenen Bewegungsbahn bewegt werden kann. Eine erste der Endstellungen bildet eine Betriebsstellung, welcher die Arretierungsausnehmung 32 zugeordnet ist, und eine zweite der Endstellungen bildet eine Ruhestellung, welcher die Arretierungsausnehmung 34 zugeordnet ist.

Durch Drehen des Kugelzapfens 3 um die Zapfenlängsachse 6 relativ zu dem Gehäuse wird die Drehfeder 19 deformiert. Da zwischen den Führungselementen 14 und 15 aber ein Freiraum 35 vorgesehen ist, durch welchen hindurch sich die Drehfeder 19 von dem Kugelzapfen 3 bis zu dem Boden 20 des Gehäuses 5 erstreckt, kann die Drehfeder 19 relativ lang ausgebildet werden, sodass eine Deformation der Drehfeder 19 im Bereich des Kugelzapfens 3 gering gehalten werden kann. Ein axiales Nachjustieren des Sperrbolzens 26 wird somit nicht durch eine Deformation der Drehfeder 19 behindert.

Aus Fig. 2 ist der Gehäuseboden 20 in Draufsicht ersichtlich, an dem zwei axiale Erhebungen 36 vorgesehen sind, welche die quer zur Zapfenlängsachse 6 verlaufende Nut 24 begrenzen, in welche der gehäuseseitige Endbereich 23 der Drehfeder 19 einliegt. Es ist erkennbar, dass die Nut 24 nicht gerade verläuft, sondern sich zu ihren radialen Enden hin aufweitet. Durch die aufgeweiteten Nutenden ist der gehäuseseitige Endbereich 23 relativ zu dem Gehäuse 5 begrenzt drehbar, sodass der Kugelzapfen 3 gegenüber dem Gehäuse 5 bezüglich einer Drehung um die Zapfenlängsachse 6 ein Spiel aufweist, was auch aus Fig. 3 hervorgeht, die einen Schnitt durch das Kugelschwenkmodul 1 entlang der aus Fig. 1 ersichtlichen Schnittlinie A-A zeigt. Somit ist die Belastung der Drehfeder 19 reduzierbar, da diese nicht in jeder Stellung des Kugelzapfens 3 durch eine Bewegung desselben sofort einer Spannungsänderung unterzogen wird. Ferner ist aus Fig. 3 ein geschnittener Teilbereich der Führungsfläche 13 ersichtlich, sodass die unebene Ausgestaltung der Führungsfläche 13 deutlich wird.

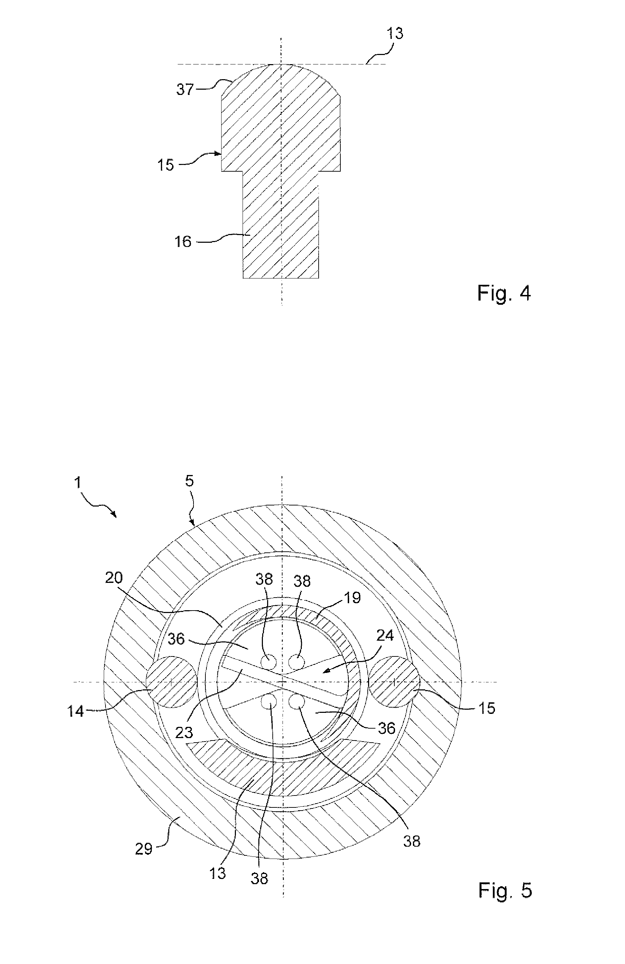

Fig. 4 zeigt einen Schnitt durch das Führungselement 15 entlang der aus Fig. 3 ersichtlichen Schnittlinie B-B, wobei das Führungselement 15 eine sich in Richtung der schematisch angedeuteten Führungsfläche 13 verjüngende Kopfkontur 37 aufweist.

Somit ist es möglich, dass das Führungselement 15 mit der Führungsfläche 13 in Linienberührung steht. Die Führungselemente bilden insbesondere jeweils einen Gleitstein.

Aus Fig. 5 ist ein Querschnitt durch ein Kugelschwenkmodul 1 gemäß einer zweiten Ausführungsform ersichtlich, wobei zu der ersten Ausführungsform ähnliche oder identische Merkmale mit denselben Bezugszeichen wie bei der ersten Ausführungsform bezeichnet sind. Im Unterschied zur ersten Ausführungsform sind mehrere, hier vier, Vorsprünge 38 vorgesehen, die zueinander einen Abstand aufweisen und in axialer Richtung 9 von dem Boden 20 in Richtung auf den Kugelzapfen 3 vorstehen. Die Vorsprünge 38 sind zu Paaren zusammengefasst, wobei der gehäuseseitige Endbereich 23 der Drehfeder 19 in den Zwischenraum zwischen zwei Vorsprungspaaren mit Spiel einliegt. Der gehäuseseitige Endbereich 23 steht daher mit dem Gehäuse 5 in Drehmitnahmeverbindung, die mit einem Spiel versehen ist. Die Vorsprünge 38 bilden insbesondere eine Sicherung, die ein axiales Ausrücken des gehäuseseitigen Endbereichs 23 der Drehfeder 19 aus der Nut 24 verhindert. Alternativ könnte auf die Erhebungen 36 aber auch verzichtet werden, sodass der gehäuseseitige Endbereich 23 ausschließlich mittels der Vorsprünge 38 am Gehäuse 5 gelagert ist. Bevorzugt sind die Vorsprünge 38 als zylindrische Stifte ausgebildet.

Gemäß der zweiten Ausführungsform sind die Führungselemente 14 und 15 als Kugeln ausgebildet, die in den Vertiefungen 45 einliegen, die dazu insbesondere muldenförmig ausgebildet sind. Die Führungselemente 14 und 15 stehen mit der Führungsfläche 13 somit jeweils in Punktberührung. Zur weiteren Beschreibung der zweiten Ausführungsform wird auf die Beschreibung der ersten Ausführungsform verwiesen, insbesondere auf die Beschreibung der Fig. 1 und 2. Gemäß der zweiten Ausführungsform kann allerdings auf die Bohrungen 17 verzichtet werden, da die als Kugeln ausgebildeten Führungselemente 14 und 15 nicht in diese Bohrungen eingreifen.

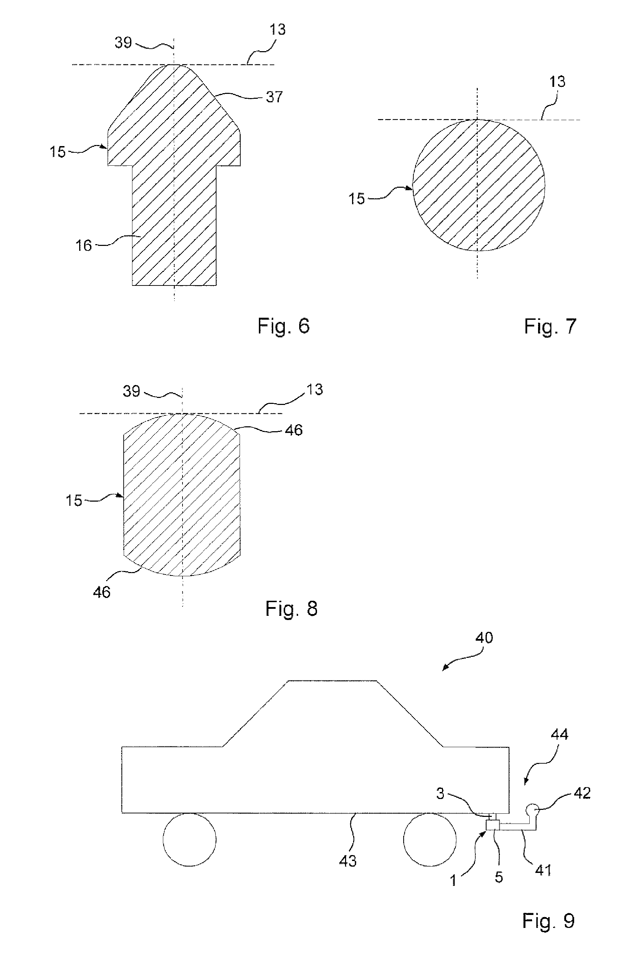

Aus Fig. 6 ist ein Schnitt durch ein Führungselement 15 gemäß einer dritten Ausführungsform ersichtlich, wobei zu der ersten Ausführungsform ähnliche oder identische Merkmale mit denselben Bezugszeichen wie bei der ersten Ausführungsform bezeichnet sind. Das Führungselement 15 kann mit seinem Vorsprung 16 in die zugehörige Bohrung 17 gemäß Fig. 1 eingesetzt werden, ist im Unterschied zur ersten Ausführungsform allerdings bezüglich einer Rotationsachse 39 rotationssymmetrisch ausgebildet und steht mit der Führungsfläche 13 in Punktberührung. Die Führungselemente gemäß der ersten Ausführungsform können jeweils durch ein Führungselement gemäß der dritten Ausführungsform ersetzt werden. Zur weiteren Beschreibung der dritten Ausführungsform wird auf die Beschreibung der ersten Ausführungsform verwiesen.

Aus Fig. 7 ist ein Schnitt durch ein Führungselement 15 gemäß einer vierten Ausführungsform ersichtlich, wobei zu der ersten Ausführungsform ähnliche oder identische Merkmale mit denselben Bezugszeichen wie bei der ersten Ausführungsform bezeichnet sind. Das Führungselement 15 ist als zylindrischer Stift ausgebildet und steht daher mit der Führungsfläche 13 in Linienberührung. Die Führungselemente gemäß der ersten Ausführungsform können jeweils durch ein Führungselement gemäß der vierten Ausführungsform ersetzt werden. Zur weiteren Beschreibung der vierten Ausführungsform wird auf die Beschreibung der ersten Ausführungsform verwiesen. Gemäß der vierten Ausführungsform kann allerdings auf die Bohrungen 17 verzichtet werden, da die als zylindrische Stifte ausgebildeten Führungselemente nicht in diese Bohrungen eingreifen. Ferner sind die Vertiefungen 45 vorzugsweise rinnenförmig ausgebildet.

Aus Fig. 8 ist ein Schnitt durch ein Führungselement 15 gemäß einer fünften Ausführungsform ersichtlich, wobei zu der ersten Ausführungsform ähnliche oder identische Merkmale mit denselben Bezugszeichen wie bei der ersten Ausführungsform bezeichnet sind. Im Unterschied zur ersten Ausführungsform ist das Führungselement 15 tonnenförmig ausgebildet und weist konvexe Stirnflächen 46 auf. Das Führungselement 15 ist bezüglich der Rotationsachse 39 rotationssymmetrisch ausgebildet und steht mit einer seiner konvexen Stirnflächen 46 mit der Führungsfläche 13 in Punktberührung. Die der Führungsfläche 13 abgewandte Stirnfläche des Führungselements kann alternativ aber auch anders, beispielsweise als ebene Fläche, ausgebildet sein. Die Führungselemente gemäß der ersten Ausführungsform können jeweils durch ein Führungselement gemäß der fünften Ausführungsform ersetzt werden. Zur weiteren Beschreibung der fünften Ausführungsform wird auf die Beschreibung der ersten Ausführungsform verwiesen. Gemäß der fünften Ausführungsform kann allerdings auf die Bohrungen 17 verzichtet werden, da die tonnenförmig ausgebildeten Führungselemente vorzugsweise nicht in diese Bohrungen eingreifen.

Aus Fig. 9 ist eine schematische Seitenansicht eines Kraftfahrzeugs 40 mit einem Kugelschwenkmodul 1 ersichtlich, dessen Gehäuse 5 starr mit einer Kugelstange 41 verbunden ist, die an ihrem freien Ende eine Kupplungskugel 42 trägt. Der Kugelzapfen 3 des Kugelschwenkmoduls 1 ist fahrzeugheckseitig starr mit einem Fahrzeugaufbau 43 des Fahrzeugs 40 verbunden, wobei diese Verbindung lösbar oder unlösbar ausgebildet sein kann. Das Kugelschwenkmodul 1 bildet somit einen Teil einer Anhängevorrichtung 44 des Fahrzeugs 40, wobei aus Fig. 8 die Betriebsstellung ersichtlich ist. Mittels des Kugelschwenkmoduls 1 kann die Kugelstange 41 unter das Fahrzeug 40 geschwenkt werden, was der Ruhestellung entspricht. Insbesondere kann ein Anhängerfahrzeug an die Kupplungskugel 42 angekuppelt werden. Als Kugelschwenkmodul gemäß Fig. 8 kann jede der zuvor beschriebenen Ausführungsformen eingesetzt werden.

### Bezugszeichen

- 1: Kugelschwenkmodul
- 2: Gelenkkugel
- 3: Kugelzapfen
- 4: Lagerschale
- 5: Gehäuse
- 6: Zapfenlängsachse
- 7: Innenraum des Gehäuses
- 8: Verschlussring
- 9: axiale Richtung
- 10: Zapfenöffnung
- 11: Zapfenbereich des Kugelzapfens
- 12: Dichtungsbalg
- 13: Führungsfläche
- 14: Führungselement
- 15: Führungselement
- 16: axialer Vorsprung des Führungselements
- 17: axiale Bohrung im Gehäuse
- 18: Mittellängsachse des Gehäuses
- 19: Drehfeder
- 20: Boden des Gehäuses
- 21: zapfenseitiger Endbereich der Drehfeder
- 22: Bohrung im Kugelzapfen
- 23: gehäuseseitiger Endbereich der Drehfeder
- 24: Nut am Boden des Gehäuses
- 25: Sperrbolzenloch
- 26: Sperrbolzen
- 27: Betätigungsfläche des Sperrbolzens
- 28: Verriegelungselement
- 29: Wandung des Gehäuses
- 30: Verriegelungselementloch in Gelenkkugel
- 31: Sperrbolzenfeder
- 32: Arretierungsausnehmung
- 33: Druckstift
- 34: Arretierungsausnehmung
- 35: Freiraum
- 36: axiale Erhebung am Gehäuseboden
- 37: Kopfkontur des Führungselements
- 38: axialer Vorsprung
- 39: Rotationsachse
- 40: Fahrzeug
- 41: Kugelstange
- 42: Kupplungskugel
- 43: Fahrzeugaufbau
- 44: Anhängevorrichtung
- 45: axiale Vertiefung (Lagerstätte) im Gehäuse
- 46: konvexe Stirnfläche

## Patentansprüche

1. Kugelschwenkmodul mit einem Gehäuse (5), einem eine Gelenkkugel (2) aufweisenden und sich in Richtung einer Zapfenlängsachse (6) erstreckenden Kugelzapfen (3), der mittels der Gelenkkugel (2) bewegbar in dem Gehäuse (5) gelagert ist, sich in einer axialen Richtung (9) aus dem Gehäuse (5) heraus erstreckt und an der Gelenkkugel (2) eine unebene Führungsfläche (13) aufweist, mehreren an dem Gehäuse (5) vorgesehenen Führungselementen (14, 15), die mit der Führungsfläche (13) in Kontakt stehen, und einer zwischen den Kugelzapfen (3) und das Gehäuse (5) geschalteten Drehfeder (19), deren Spannung durch Drehen des Kugelzapfens (3) um die Zapfenlängsachse (6) relativ zu dem Gehäuse (5) veränderbar ist, **dadurch gekennzeichnet, dass** die zwischen den separat voneinander am Gehäuse (5) gelagerten Führungselementen (14, 15) verlaufende Drehfeder (19) sich von dem Kugelzapfen (3) nahezu in Richtung der Zapfenlängsachse (6) an den Führungselementen (14, 15) vorbei erstreckt und im axialen Abstand zu diesen am Gehäuse (5) gelagert ist.

2. Kugelschwenkmodul nach Anspruch 1, **dadurch gekennzeichnet, dass** die Drehfeder (19) mit einer zapfenseitigen Lagerung an dem Kugelzapfen (3) und mit einer gehäuseseitigen Lagerung an dem Gehäuse (5) gelagert ist, wobei die Lagerungen in axialer Richtung auf unterschiedlichen Seiten der Führungselemente (14, 15) liegen.

3. Kugelschwenkmodul nach Anspruch 1 oder 2, **dadurch gekennzeichnet, dass** die Drehfeder (19) mittels eines oder mehrerer Mitnehmer am Gehäuse (5) gelagert ist, die in axialer Richtung (9) auf einer dem Kugelzapfen (3) abgewandten Seite der Führungselemente (14, 15) im Gehäuse (5) angeordnet sind.

4. Kugelschwenkmodul nach einem der vorangehenden Ansprüche, **dadurch gekennzeichnet, dass** die Drehfeder (19) einen gehäuseseitigen Endbereich (23) umfasst und mit diesem an einem der Führungsfläche (13) gegenüberliegenden Boden (20) des Gehäuses (5) gelagert ist.

5. Kugelschwenkmodul nach den Ansprüchen 3 und 4, **dadurch gekennzeichnet, dass** die Mitnehmer am Boden (20) des Gehäuses (5) vorgesehene, sich in axialer Richtung (9) erstreckende und zueinander beabstandete Vorsprünge (36, 38) umfassen oder bilden, zwischen denen der gehäuseseitige Endbereich (23) der Drehfeder (19) mit Spiel angeordnet ist.

6. Kugelschwenkmodul nach Anspruch 4 oder 5, **dadurch gekennzeichnet, dass** der gehäuseseitige Endbereich (23) der Drehfeder (19) in einer am Boden (20) des Gehäuses (5) vorgesehenen Nut (24) einliegt.

7. Kugelschwenkmodul nach Anspruch 6, **dadurch gekennzeichnet, dass** die Nut quer zur axialen Richtung (9) verläuft und zu ihren Enden hin aufgeweitet ist.

8. Kugelschwenkmodul nach einem der vorangehenden Ansprüche, **dadurch gekennzeichnet, dass** die Drehfeder (19) als Schraubenfeder ausgebildet ist und einen schraubenförmig gewundenen Bereich aufweist, mit welchem die Drehfeder (19) sich in Richtung der Zapfenlängsachse (6) an den Führungselementen (14, 15) vorbei erstreckt.

9. Kugelschwenkmodul nach Anspruch 8 und nach einem der Ansprüche 4 bis 7, **dadurch gekennzeichnet, dass** der gehäuseseitige Endbereich (23) der Drehfeder (19) von dem schraubenförmigen Bereich quer zur Zapfenlängsachse (6) abgebogen ist.

10. Kugelschwenkmodul nach einem der vorangehenden Ansprüche, **dadurch gekennzeichnet, dass** die Drehfeder (19) einen zapfenseitigen Endbereich (21) umfasst, der in ein in dem Kugelzapfen (3) eingebrachtes Loch (22) eingreift.

11. Kugelschwenkmodul nach einem der vorangehenden Ansprüche, **dadurch gekennzeichnet, dass** die Anzahl der Führungselemente (14, 15) gleich zwei ist.

12. Kugelschwenkmodul nach einem der vorangehenden Ansprüche, **dadurch gekennzeichnet, dass** die Führungselemente (14, 15) jeweils mit der Führungsfläche (13) in Punktberührung oder in Linienberührung stehen.

13. Kugelschwenkmodul nach einem der vorangehenden Ansprüche, **dadurch gekennzeichnet, dass** die Führungselemente (14, 15) jeweils eine sich in Richtung der Führungsfläche (13) verjüngende Kopfkontur (37) aufweisen und mit dieser an der Führungsfläche (13) anliegen.

14. Kugelschwenkmodul nach einem der vorangehenden Ansprüche, **dadurch gekennzeichnet, dass** durch das Zusammenwirken der Führungselemente (14, 15) mit der Führungsfläche (13) eine Drehung des Kugelzapfens (3) relativ zu dem Gehäuse (5) um die Zapfenlängsachse (6) abhängig von einer seitlichen Auslenkung des Kugelzapfens (3) relativ zu dem Gehäuse (5) ist.

15. Kugelschwenkmodul nach einem der vorangehenden Ansprüche, **dadurch gekennzeichnet, dass** die Führungsfläche (13) eine Regelfläche ist.
